# EUROPÄISCHE PATENTANMELDUNG

(11) **EP 0 753 427 A2**
(43) Veröffentlichungstag der Anmeldung: **15.01.1997**
(21) Anmeldenummer: 96110697.8
(22) Anmeldetag: 03.07.1996
(51) Int. Cl.: B60N 3/02

(54) **Bügelförmiger Haltegriff für Kraftfahrzeuge mit einer Einrichtung zum Aufhängen von Kleidungsstücken**

(30) Priorität: 14.07.1995 DE 19525731
(71) Anmelder: Innovations Ltd., Sliema SLM 15 (MT)
(72) Erfinder: Merten, Günter, Landrijiet (1/o Rabat), RBT 04 (MT)
(74) Vertreter: Schwarz, Klaus-Jürgen, Dipl.-Ing.

(57) **Zusammenfassung**

Zum Aufhängen von Kleidungsstücken in Personenkraftfahrzeugen ist es allgemein üblich, normale Kleiderbügel bedarfsweise in Haltegriffe einzuhängen, die sich über den Seitenfenstern befinden. Solche eingehängte Kleiderbügel neigen während der Fahrt zu Störgeräuschen und scheuernden Schlingerbewegungen. Diese könnten den Haltegriff abnutzen und zum Herunterrutschen der Kleidungsstücke führen. Ziel der Erfindung ist es dabei, einen bügelförmigen Haltegriff für Kraftfahrzeuge mit einer Aufhängeeinrichtung für Kleidungsstücke zu schaffen, der ohne jedes Sicherheitsrisiko als Haltegriff voll funktionsfähig ist und außerdem die Funktion eines Kleiderbügels erfüllt. Der Kleiderbügel soll aus dem Haltegriff mit nur wenigen Handgriffen bei Bedarf in einfacher Weise jederzeit herausgeklappt oder herausgezogen und verrastet werden, um seine Einzelteile nach Beendigung der Benutzung als Kleiderbügel in einfacher Weise wieder in den Haltegriff zu versenken und damit den früheren Funktionszustand als Haltegriff ohne jedes Verletzungsrisiko einwandfrei wieder herzustellen. Hierfür weist der Haltegriff zumindest ein beweglich gelagertes Bügelteil auf, dessen Stellung mittels einfacher Handgriffe zwischen einer Funktionsstellung und einer Verwahrstellung veränderbar ist. Der Haltegriff ist außerdem fest mit einem Basis- oder Wandteil verbindbar und weist unlösbar mit einem Trägerteil verbundene Aufhängeelemente (4) auf, die in der Verwahrstellung weitgehend im Trägerteil versenkbar sind oder ein anderes Funktionselement bilden.

## Beschreibung

Die Erfindung betrifft einen bügelförmigen Haltegriff für Kraftfahrzeuge mit einer Einrichtung zum Aufhängen von Kleidungsstücken an einem in der Art eines Kleiderbügels ausgebildeten Aufhänger.

Zum Aufhängen von Kleidungsstücken in Personenkraftfahrzeugen ist es allgemein üblich, normale Kleiderbügel bedarfsweise in Haltegriffe einzuhängen, die sich über den Seitenfenstern befinden.

Kleiderbügel sind zumeist einstückig ausgebildet. Auch ist es bekannt, Kleiderbügel mehrteilig auszubilden und die schwenkbar verbundenen Einzelteile z.B. für Reisezwecke zu einem kompakten Gebilde zusammzuklappen. Außerdem sind mehrteilige Kleiderbügel bekannt, die teleskopartig ausgebildet und zusammenschiebbar sind. Ferner sind z.B. in Hotelschränken Kleiderbügel bekannt, die zur Diebstahlsicherung auf einer Kleiderstange mit geschlossenen Ringösen gehalten sind.

So ist aus DE 800 495 C1 eine Kleiderablage bekannt, bei der in einem Gerät mit einer Grundplatte zur Wandbefestigung, von der ein Steg mit einem Aufhängehaken für Kopfbedeckung und Bekleidungsstück nach vorne hervorsteht, zusätzlich ein zweiteiliger, aufklappbarer Kleiderbügel mit Verlängerungsstücken vorgesehen ist, der in der aufgeklappten Stellung durch federnde Klammern gesichert wird. Als bügelförmiger Haltegriff für Kraftfahrzeuge ist eine solche Kleiderablage allein schon aus sicherheitstechnischen Gründen nicht geeignet, da sie auch im zusammengeklappten Zustand des Kleiderbügels aufgrund ihrer sperrigen Konstruktion ein hohes Verletzungsrisiko darstellt.

Aus DE 693 305 C1 ist weiterhin ein Kleiderhaken mit einem zusammenklappbaren und in eine Wandplatte versenkbaren Kleiderbügel bekannt, der zur Wandbefestigung bestimmt ist. Auch dieser Kleiderhaken ist aufgrund seiner sperrigen Ausbildung schon aus Sicherheitsgründen für eine Verwendung als Haltegriff in Kraftfahrzeugen nicht geeignet.

Aus DE 19 14 787 U1 ist auch ein Kleiderbügel bekannt mit einem Aufhängehaken, der durch ein Scharnier mit einem kurzen, rohrartigen Mittelstück verbunden ist, das in seinem Inneren nebeneinander zwei Sätze von konzentrisch ineinander angeordneten Rohrstücken enthält, die aus dem Mittelstück nach entgegengesetzten Seiten teleskopartig bis zu Rasten herausgezogen werden können, die in jedem Rohrstück vorgesehen sind. Die Enden der jeweils am weitesten herausziehbaren Rohrstücke sind hierfür mit einer Kerbe versehen, wodurch das Herausziehen der einzelnen Glieder in die Gebrauchsposition als Kleiderbügel erleichtert wird. Ein solcher zusammenschiebbarer Kleiderbügel kann lediglich leichter verstaut werden als ein starrer herkömmlicher Kleiderbügel. Er ist jedoch ebensowenig wie dieser zur Verwendung als Haltegriff für Kraftfahrzeuge geeignet.

Entsprechendes gilt für einen aus DE 17 31 694 U1 bekannten zusammenschiebbaren Taschenkleiderbügel, dessen Bügelteile ebenfalls aus mehreren teleskopartig ineinanderschiebbaren Teilstücken bestehen.

Dies gilt auch für eine weitere, aus DE-AS 10 16 421 bekannte Aufhängevorrichtung für Kleidungsstücke, die zur Befestigung an der Oberkante eines Kleiderschrankes bestimmt ist. Diese Aufhängevorrichtung besteht aus einem über die Schrankoberkante hinaus beweglichen, freitragenden Ausleger mit einem gegenüber der Schrankoberkante verschiebbaren Arm, dessen freies Ende einen Hosenhalter und einen Kleiderbügel trägt.

Aus DE 26 25 958 A1 ist ferner ein Kleiderbügel bekannt mit zwei seitlichen Trägerstücken, die in verschiedenen Ebenen in einen mittleren Aufhängeteil einschiebbar sind und an diesem in einer Aufhängeposition für ein Kleidungsstück verriegelt werden können.

Der Erfindung liegt die Aufgabe zugrunde, einen bügelförmigen Haltegriff für Kraftfahrzeuge mit einer Aufhängeeinrichtung für Kleidungsstücke zu schaffen, der ohne jedes Sicherheitsrisiko als Haltegriff voll funktionsfähig ist und außerdem die Funktion eines Kleiderbügels erfüllt, wobei der Kleiderbügel aus dem Haltegriff mit nur wenigen Handgriffen bei Bedarf in einfacher Weise jederzeit herausgeklappt oder herausgezogen und verrastet werden kann, um seine Einzelteile nach Beendigung der Benutzung als Kleiderbügel in einfacher Weise wieder in den Haltegriff zu versenken und damit den früheren Funktionszustand als Haltegriff ohne jedes Verletzungsrisiko einwandfrei wieder herzustellen.

Diese Aufgabe wird gemäß der Erfindung durch einen bügelförmigen Haltegriff für Kraftfahrzeuge mit einer Einrichtung zum Aufhängen von Kleidungsstücken an einem in der Art eines Kleiderbügels ausgebildeten Aufhänger gelöst, der wie folgt ausgebildet ist:
a) der Haltegriff weist zumindest ein beweglich gelagertes Bügelteil auf, dessen Stellung mittels einfacher Handgriffe zwischen einer Funktionsstellung und einer Verwahrstellung veränderbar ist,
b) der Haltegriff ist fest mit einem Basis- oder Wandteil verbindbar,
c) der Haltegriff weist unlösbar mit einem Trägerteil verbundene Aufhängeelemente (4) auf, die in der Verwahrstellung weitgehend im Trägerteil versenkbar sind oder ein anderes Funktionselement bilden.

Der Haltegriff mit der Einrichtung zum Aufhängen von Kleidungsstücken kann mit besonderem Vorteil überall dort eingesetzt werden, wo die Aufhängeeinrichtung unter Raummangel nur gelegentlich zu nutzen ist oder wo nicht entfernbare frei hängende ungenutzte Kleiderbügel, insbesondere aus Sicherheitsgründen oder auch aus ästhetischen Gründen vermieden werden sollen, was beispielsweise auf Kraftfahrzeuge zutrifft. Ebenso ist es aber auch möglich, den Haltegriff in Rücklehnen von Sitzen in Flugzeugen oder Reisebussen einzugliedern, um den Fahrgästen die Gelegenheit zu geben, Kleidungsstücke formhaltig aufzubewahren.

Durch die feste Verbindung der Aufhängeelemente mit dem Haltegriff kann die Aufhängeeinrichtung nicht ohne weiteres entfernt werden. Durch ihre Verstellbarkeit können die Aufhängeelemente in der Verwahrstellung im Haltegriff außerdem so kompakt gehalten werden, daß sie unauffällig oder verdeckt an diesem gehalten bzw. in den Haltegriff integriert werden können.

Besonders vorteilhafte Weiterbildungen der Erfindung ergeben sich aus den Merkmalen der Ansprüche 2 bis 12.

Die Weiterbildungen nach Anspruch 2 können je nach der Art des Haltegriffes ausgewählt und in einfacher Weise realisiert werden.

Durch die Merkmale des Anspruches 3 können die Aufhängeelemente in der Verwahrstellung am Haltegriff sehr kompakt ausgebildet werden. Sie benötigen dann so wenig Raum, daß sie selbst in relativ kleinen Haltegriffen Platz finden.

Durch die Merkmale des Anspruches 4 werden die Aufhängeelemente sicher in der jeweiligen Stellung am Haltegriff gehalten und können mit einfachen Handgriffen in ihrer Lage verändert werden.

Der Haltegriff mit den Merkmalen nach Anspruch 5 kann z.B. neben den Rücksitzen eines Automobils über den Seitenfenstern angeordnet und im Griffbereich mit Ausnehmungen versehen sein, die die Aufhängeelemente aufnehmen. Der Haltegriff ist üblicherweise so stabil gestaltet, daß die Aufhängeelemente in der Funktionsstellung an ihm sicher verankert sind und entsprechend stark belastet werden können. Der Haltegriff kann bei ausgestellten Aufhängeelementen einen Teil der Aufhängeeinrichtung bilden und so zweifach genutzt werden. Die Aufhängeelemente befinden sich im Vergleich zu einem in den Haltegriff eingehängten Kleiderbügel in einer größeren Höhe über dem Boden, so daß die Gefahr der Verschmutzung oder des Einklemmens der Kleidungsstücke in der Tür verringert wird. Ein eingehängter Kleiderbügel neigt während der Fahrt zu Störgeräuschen und scheuernden Schlingerbewegungen. Diese könnten den Haltegriff abnutzen und zum Herunterrutschen der Kleidungsstücke führen. Die Aufhängeelemente nach der Erfindung befinden sich in einer stabilen Lage, so daß das Scheuern und Schlingern vermieden wird.

Durch die Weiterbildung nach Anspruch 6 werden die Aufhängeelemente im Haltegriff so integriert, daß die Griffunktion und der ästhetische Eindruck nicht beeinträchtigt werden.

Die Weiterbildung nach Anspruch 7 läßt sich besonders einfach und kostengünstig realisieren.

Die Aufhängeelemente nach den Ansprüchen 8 und 9 bilden in ihrer Verwahrstellung den Haltegriff. Sie sind entsprechend formstabil ausgebildet. Die Funktionsstellung kann so festgelegt werden, daß sich die Aufhängeelemente der Form eines Kleiderbügels annähern.

Die Aufhängeelemente nach Anspruch 10 können z. B. gemäß Anspruch 11 einen U-förmigen und einen rohrförmigen Querschnitt aufweisen, wobei das rohrförmige Teil in der Verwahrstellung im U-förmigen Teil einliegt und mit diesem den Haltegriff bildet.

Bei der Ausführungsform nach Anspruch 12 sind die Aufhängeelemente beide z.B. rohrförmig ausgebildet und mittels einer übergeschobenen Hülse gegeneinander fixiert. Diese kann an einem der Aufhängeelemente so weit zurückgeschoben werden, daß das andere Aufhängeelement freigegeben wird. Die beiden Aufhängeelemente können dann ungehindert in die Funktionsstellung zum Aufhängen der Kleidungsstücke geschwenkt werden.

Im folgenden wird die Erfindung anhand mehrerer in der Zeichnung schematisch dargestellter Ausführungsbeispiele näher erläutert, wobei Teile gleicher Funktion und gleichen Namens bei unterschiedlichen Ausführungen durchgehend mit gleichen Bezugszeichen versehen sind. Es zeigen:
- Fig. 1 und 2: einen an einer Innenwand eines Automobils befestigten Haltegriff mit integrierten Aufhängeelementen für Kleidungsstücke in zwei verschiedenen Stellungen,
- Fig. 3 und 4: einen anderen Haltegriff mit schräg ausziehbaren Aufhängelementen in zwei verschiedenen Seitenansichten,
- Fig. 5, 6 und 7: noch einen anderen Haltegriff mit ausschwenkbaren Aufhängeelementen in verschiedenen Stellungen und Ansichten,
- Fig. 8 und 9: einen weiteren Haltegriff mit ausklappbaren Aufhängeelementen in einer Seitenansicht und in einer Schnittdarstellung gemäß Schnittlinie IX - IX in Fig. 8,
- Fig. 10, 11 und 12: einen zweiteiligen Handgriff mit zwei ineinandergreifenden Aufhängeelementen, die zwischen einer Griffstellung und einer Aufhängestellung verstellbar sind, und
- Fig. 13 und 14: einen weiteren zweiteiligen Haltegriff mit einer die beiden Aufhängeelemente in der Griffstellung verbindenden Hülse.

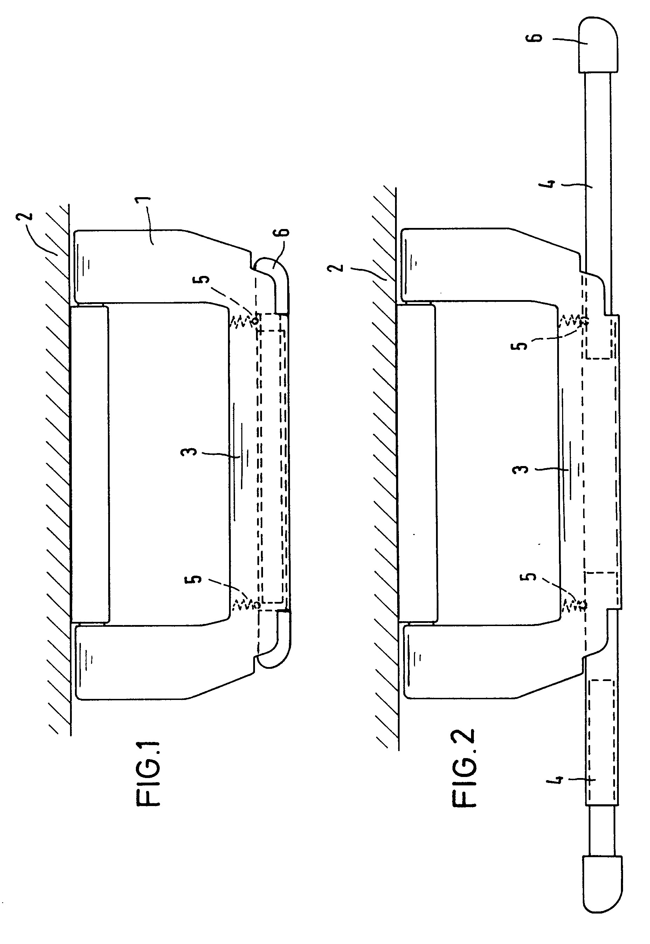

Nach Fig. 1 und Fig. 2 ist ein Haltegriff 1 an einem Wandteil 2, beispielsweise an der Innenwand eines Automobils, befestigt. Er weist ein sich geradlinig erstreckendes Griffteil 3 auf, in dem stangenartige Aufhängeelemente 4 teleskopartig verschiebbar gelagert sind. In ihrer Funktionsstellung von Fig. 2 sind diese Aufhängeelemente 4 weitgehend aus dem Griffteil 3 herausgezogen. In ihrer Verwahrstellung von Fig. 1 sind sie so weit in das Griffteil 3 hineingeschoben, daß sie von diesem nahezu vollständig aufgenommen sind. Die Aufhängeelemente 4 werden in den beiden Stellungen durch Rastelemente 5 gesichert. Die freien Enden der Aufhängeelemente 4 weisen abgerundete Formkappen 6 auf, die sich in der Verwahrstellung der Kontur des Haltegriffes 1 anpassen. Die Aufhängeelemente 4 sind von unterschiedlichem unrunden Querschnitt und so geformt, daß sie am Griffteil 3 verdrehsicher geführt sind und teleskopartig ineinander geschoben werden können.

Wie in Fig. 2 dargestellt ist, ist das linke Aufhängeelement in sich teleskopartig zusammenschiebbar ausgebildet, wodurch die maximale Länge im Vergleich zur Verwahrstellung vergrößert werden kann. Der Haltegriff 1 bildet zusammen mit den ausgezogenen Aufhängeelementen 4 (Fig. 2) eine Art Kleiderbügel, an dem Kleidungsstücke frei von Schlingerbewegungen und Störgeräuschen aufgehängt werden können. In der Verwahrstellung nach Fig. 1 dient die Einrichtung als Haltegriff 1, der sich äußerlich kaum von einem normalen Haltegriff unterscheidet.

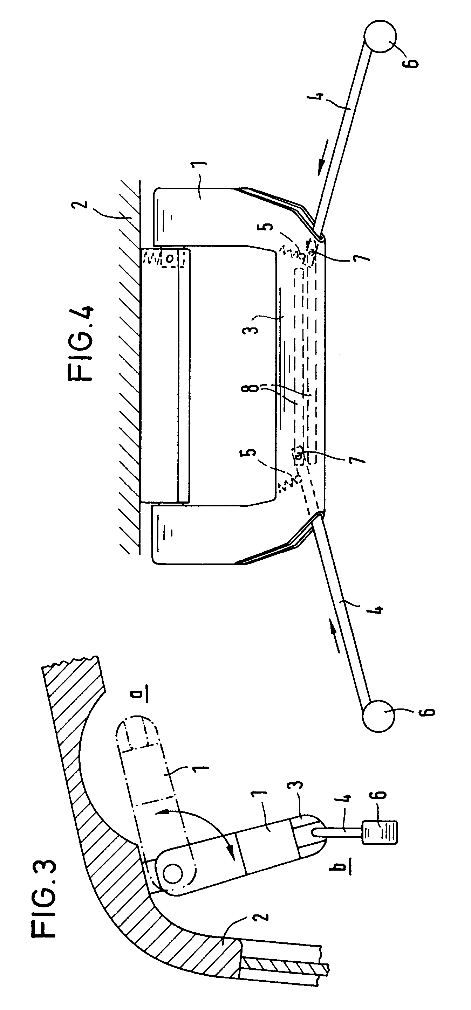

Der Haltegriff 1 nach Fig. 3 und Fig. 4 ist an dem Wandteil 2 klappbar und in zwei Stellungen verrastbar gelagert. In Fig. 3 sind die beiden Endstellungen des Haltegriffs 1 dargestellt, der entsprechend dem gebogenen Doppelpfeil zwischen einer Ruhestellung a und einer Greifstellung b schwenkbar ist. Die Aufhängeelemente 4 sind hier in ihrer ausgezogenen Funktionsstellung dargestellt und in der daneben angegebenen geradlinigen Pfeilrichtung in einen Hohlraum des Griffteils 3 nebeneinander überlappend einschiebbar, wobei ihre inneren Enden Führungszapfen 7 aufweisen, die in Führungsnuten 8 des Griffteils eingreifen. Der Hohlraum des Griffteils 3 ist so weit bemessen, daß sich die Aufhängeelemente 4 in ihrer Funktionsstellung an seiner Wandung in einer stumpfwinkelig schrägen Lage zum Griffteil 3 abstützen. Hierdurch wird die gesamte Einrichtung der Form eines Kleiderbügels angenähert. Auch hier verrunden die Formkappen 6 die Enden der Aufhängeelemente 4.

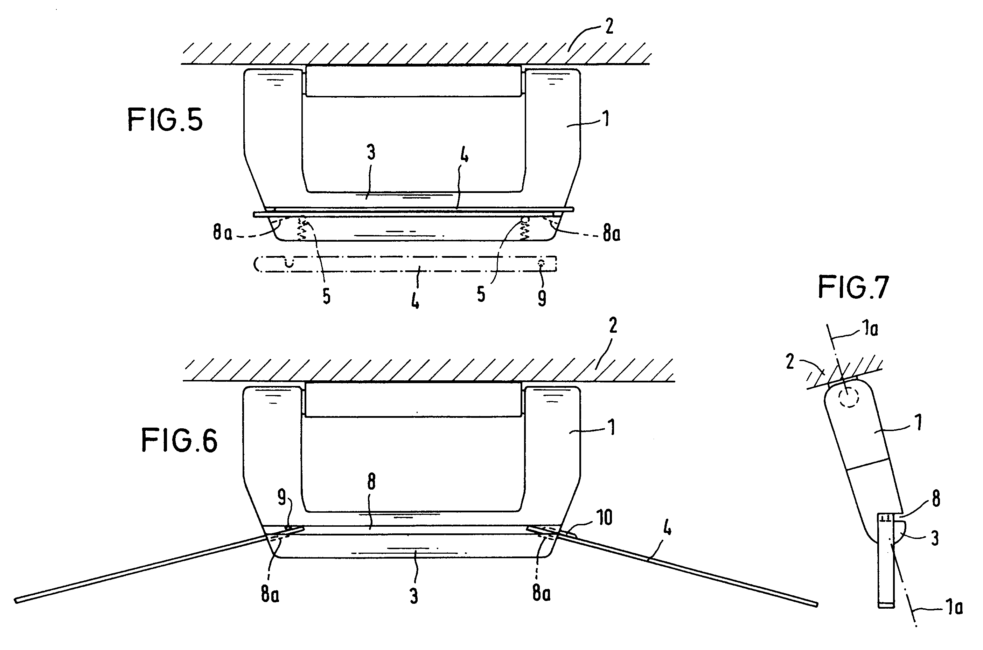

Nach Fig. 5 bis Fig. 7 sind die stangenartigen Aufhängeelemente 4 im Griffteil 3 des Haltegriffes 1 quer zu dessen Längsmittelebene 1a (Fig. 7) nach entgegengesetzten Seiten ausklappbar gelagert. In der nach innen geklappten Verwahrstellung von Fig. 5 befinden sie sich flach nebeneinanderliegend im Inneren einer seitlichen Längsnut 8 am Griffteil 3, wobei die strichpunktierten Linien eine Draufsicht auf eines der in der Längsnut 8 geführten Aufhängeelemente 4 andeuten. Die Materialebenen der Aufhängeelemente 4 erstrecken sich annähernd senkrecht zur Längsmittelebene 1a des Haltegriffs 1. Die Aufhängeelemente 4 sind um eine Schwenkachse 9 drehbar und um annähernd 180° in ihre Funktionsstellung von Fig. 6 und Fig. 7 ausklappbar. Dabei sind an beiden Enden der Längsnut 8 nach außen hin schräg abfallende Abstützflächen 8a für die Aufhängeelemente 4 im Griffteil 3 so angeordnet, daß auch hier die Aufhängeelemente 4 eine schräg abgewinkelte Lage zum Griffteil 3 einnehmen, wie in Fig. 6 gezeigt ist.

Die Aufhängeelemente 4 können im Abstützbereich mit Verstärkungssicken 10 versehen sein, die die Festigkeit erhöhen. Die aus flachem Stangenmaterial gebildeten Aufhängeelemente 4 sind im übrigen in sich so biegsam, daß sie sich der Form der aufgehängten Kleidungsstücke anpassen. Es ist auch möglich, die Aufhängeelemente 4 zu ihren freien Enden hin durch Querschnittsänderungen zunehmend nachgiebiger auszubilden, so daß sie sich noch besser an das aufgehängte Kleidungsstück anschmiegen.

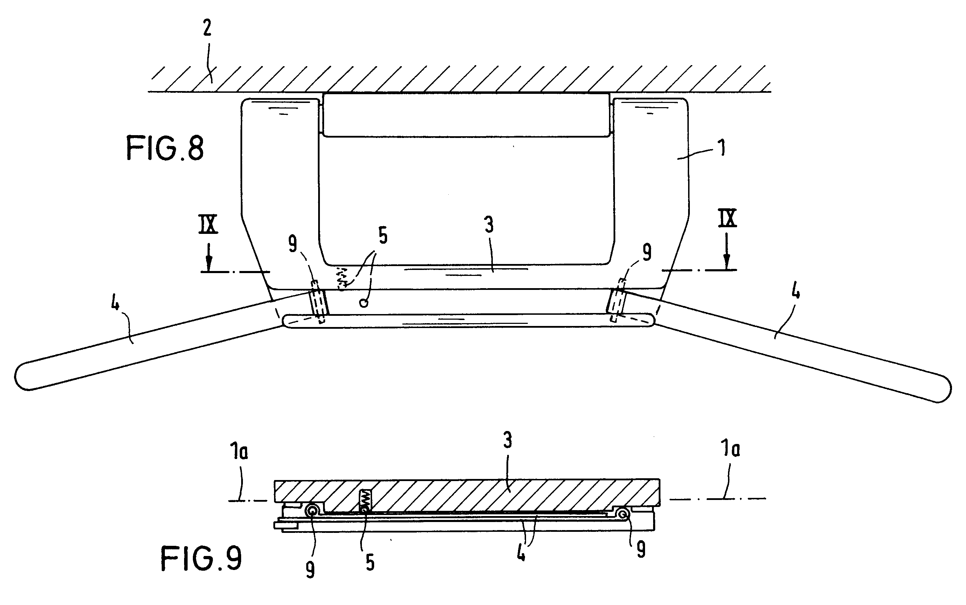

Der Haltegriff 1 nach Fig. 8 und Fig. 9 unterscheidet sich im wesentlichen vom Haltegriff nach Fig. 5 bis Fig. 7 dadurch, daß sich die Materialebenen der Aufhängeelemente 4 in den beiden Stellungen annähernd parallel zur Längsmittelebene 1a des Haltegriffs 1 (Fig. 9) erstrecken, wobei die inneren Enden der Aufhängeelemente 4 mit Spiel scharnierartig um die Schwenkachsen 9 herumgebogen und an diesen pendelnd gelagert sind. Die Schwenkachsen 9 sind schräg zur flachen Längsnut 8 des Griffteils 3 gegeneinander geneigt, so daß die Aufhängeelemente 4 aus der zusammengeklappten Verwahrstellung von Fig. 9 in eine entsprechende kleiderbügelartige Schrägstellung gemäß Fig. 8 ausgeklappt werden können.

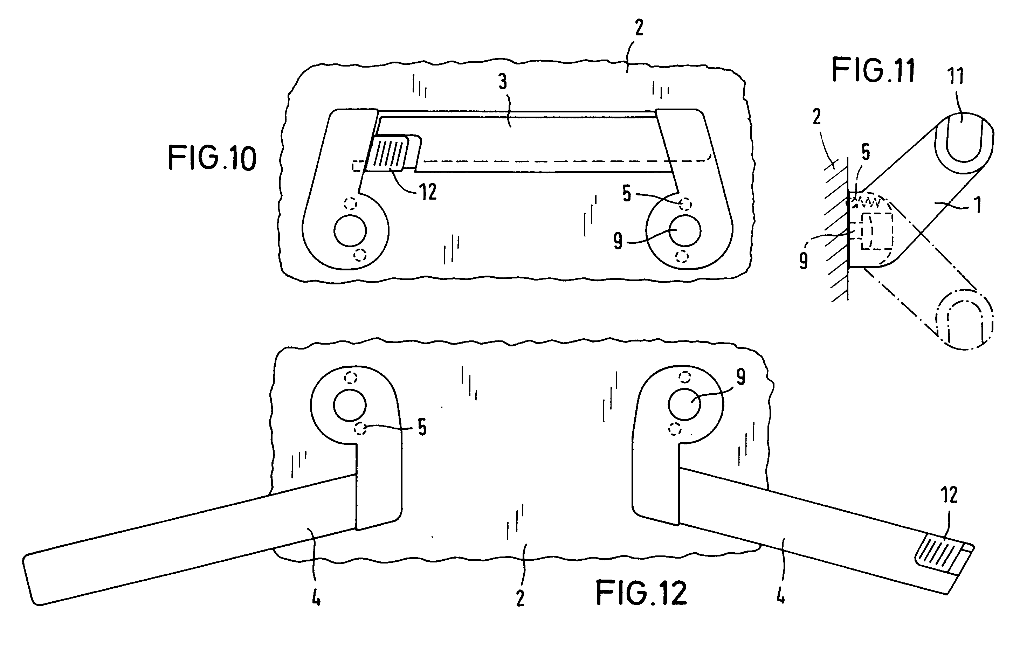

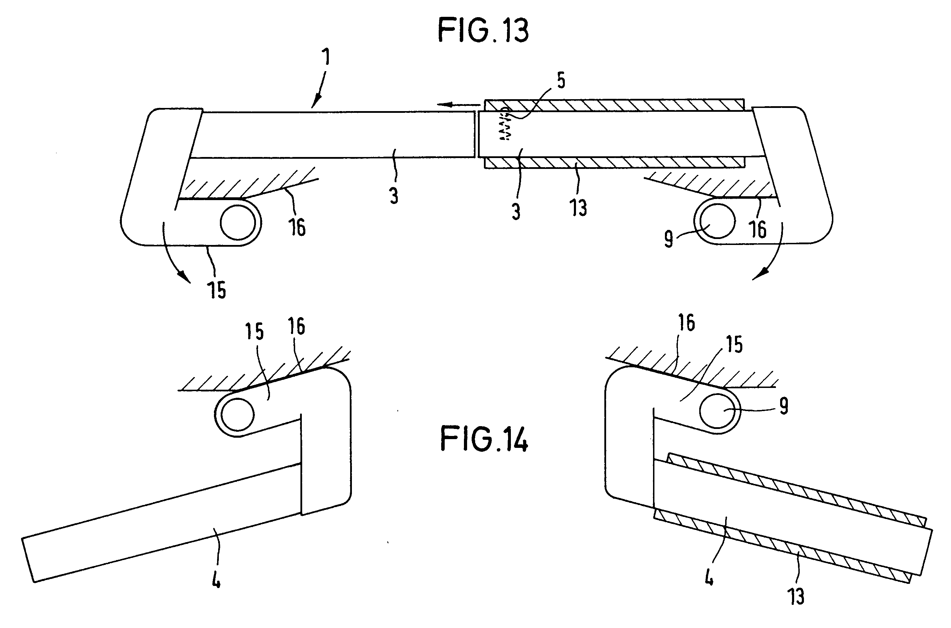

Nach Fig. 10 bis Fig. 12 besteht der Haltegriff 1 aus zwei getrennt an der Innenwand 2 gehaltenen Teilgriffen, die als Aufhängeelemente 4 dienen und um zwei zum Wandteil 2 senkrecht stehende Schwenkachsen 9 verdrehbar gelagert sind. Diese Lagerung ist so stabil ausgebildet, daß die beiden Teilgriffe in allen Stellungen hinreichend starr gehalten sind. Die Griffteile 3 der beiden Teilgriffe sind in ihrer Verwahrstellung von Fig. 10 und Fig. 11 ineinandergreifend überlappend ausgebildet, wobei eines der Griffteile 3 das andere in einer wannenartigen Ausnehmung 11 aufnimmt. Die aufeinander zu gerichteten Griffteile 3 sind durch ein Verriegelungselement 12 in dieser Stellung gesichert. Die beiden Teilgriffe sind nach dem Lösen des Verriegelungselementes 12 um die Schwenkachsen 9 in die Funktionsstellung nach Fig. 12 schwenkbar und bilden dann die Aufhängeelemente 4, die durch die Rastelemente 5 fixiert sind. Diese Stellung ist in der Seitenansicht von Fig. 11 durch strichpunktierte Linien angedeutet. Die Winkellage der Aufhängeelemente 4 ist so eingestellt, daß diese schräg zueinander in der Art eines Kleiderbügels geneigt sind. Dabei ist die wannenartige Ausnehmung 11 nach unten gerichtet, so daß die aufgehängten Kleidungsstücke auf der konvexen Seite des entsprechenden Aufhängeelementes 4 aufliegen.

Der Haltegriff 1 nach den Fig. 13 und Fig. 14 unterscheidet sich vom Haltegriff nach Fig. 10 bis Fig. 12 im wesentlichen dadurch, daß die beiden Griffteile 3 in der Verwahrstellung nach Fig. 13 zueinander fluchtend angeordnet sind, sich also nicht überlappen. Eine Fixierhülse 13 ist auf eines der beiden Griffteile 3 zurückgeschoben und durch eine Rastkugel 14 fixiert. Sie kann in der Richtung des geraden Pfeiles zur Hälfte über das gegenüberliegende Griffteil des anderen Teilgriffs geschoben und durch die Rastkugel 13 fixiert werden. Damit sind die beiden Teilgriffe in ihrer gegenseitigen Stellung gesichert und bieten einen festen Halt für einen Passagier, der sich daran festhält. Mit der Innenwand fest verbundene Anschlagflächen 16 für Fußteile 15 der Teilgriffe ersetzen hier die Rastelemente 5 von Fig. 11. Nach dem Zurückschieben der Fixierhülse 13 können die Teilgriffe entsprechend den gekrümmten Pfeilen in die Funktionsstellung geschwenkt werden, in der sie die Aufhängeelemente 4 bilden.

Sie liegen dann mit ihren Fußteilen 15 an anderen Abschnitten der Anschlagflächen 16 an und sind somit in dieser Stellung fixiert.

### Liste der Bezugszeichen

- 1: Haltegriff
- 1a: Längsmittelebene
- 2: Wandteil
- 3: Griffteil
- 4: Aufhängeelement
- 5: Rastelement
- 6: Formkappe
- 7: Führungszapfen
- 8: Längsnut
- 8a: Abstützflächen
- 9: Schwenkachse
- 10: Verstärkungssicke
- 11: Ausnehmung
- 12: Verriegelungselement
- 13: Fixierhülse
- 14: Rastkugel
- 15: Fußteil
- 16: Anschlagfläche
- a: Ruhestellung
- b: Greifstellung

## Patentansprüche

1. Bügelförmiger Haltegriff für Kraftfahrzeuge mit einer Einrichtung zum Aufhängen von Kleidungsstücken an einem in der Art eines Kleiderbügels ausgebildeten Aufhänger, der wie folgt ausgebildet ist:
a) der Haltegriff weist zumindest ein beweglich gelagertes Bügelteil auf, dessen Stellung mittels einfacher Handgriffe zwischen einer Funktionsstellung und einer Verwahrstellung veränderbar ist,
b) der Haltegriff ist fest mit einem Basis- oder Wandteil verbindbar,
c) der Haltegriff weist unlösbar mit einem Trägerteil verbundene Aufhängeelemente (4) auf, die in der Verwahrstellung weitgehend im Trägerteil versenkbar sind oder ein anderes Funktionselement bilden.

2. Haltegriff nach Anspruch 1, **dadurch gekennzeichnet,** daß die Aufhängeelemente (4) am Trägerteil schwenkbar, klappbar oder verschiebbar gelagert sind.

3. Haltegriff nach Anspruch 1 oder 2, **dadurch gekennzeichnet,** daß die Aufhängeelemente (4) in sich klappbar oder teleskopartig verschiebbar ausgebildet sind.

4. Haltegriff nach einem der Ansprüche 1 bis 3, **dadurch gekennzeichnet,** daß die Aufhängeelemente (4) in ihrer Verwahrstellung und/oder Funktionsstellung am Trägerteil verrastbar oder verriegelbar gehalten sind.

5. Haltegriff nach einem der Ansprüche 1 bis 4, **dadurch gekennzeichnet,** daß die Aufhängeelemente (4) im Haltegriff (1) versenkbar angeordnet bzw. aus diesem ausstellbar sind.

6. Haltegriff nach Anspruch 5, **dadurch gekennzeichnet,** daß die Außenseiten der Aufhängeelemente (4) in der Verwahrstellung der Außenkontur des Haltegriffs (1) angepaßt sind.

7. Haltegriff nach Anspruch 5 oder 6, **dadurch gekennzeichnet,** daß die Aufhängeelemente (4) als Stangen ausgebildet sind, die zu beiden Seiten eines Griffteils (3) des Haltegriffs (1) aus diesem herausziehbar oder herausschwenkbar sind.

8. Haltegriff nach einem der Ansprüche 1 bis 4, **dadurch gekennzeichnet,** daß die Aufhängeelemente (4) unmittelbar an einem Wandteil befestigbar sind und in ihrer Verwahrstellung gemeinsam den Haltegriff (1) bilden.

9. Haltegriff nach Anspruch 8, **dadurch gekennzeichnet,** daß die Aufhängeelemente (4) am Wandteil (2) schwenkbar befestigbar sind.

10. Haltegriff nach Anspruch 9, **dadurch gekennzeichnet,** daß die Aufhängeelemente (4) in der Verwahrstellung einander überlappend aneinanderliegen.

11. Haltegriff nach Anspruch 9 oder 10, **dadurch gekennzeichnet,** daß die Aufhängeelemente (4) einen U-förmigen und einen rohrförmigen Querschnitt derart aufweisen, daß das rohrförmige Teil in der Verwahrstellung im U-förmigen Teil einliegt und mit diesem den Haltegriff (1) bildet.

12. Haltegriff nach Anspruch 9, **dadurch gekennzeichnet,** daß die Aufhängeelemente (4) in der Verwahrstellung zueinander fluchtend angeordnet sind, und daß an einem der Aufhängeelemente (4) eine axial verschiebbare Fixierhülse (13) angebracht ist, die das andere Aufhängeelement (4) zumindest teilweise übergreift.
